(19) **Europäisches Patentamt**

**European Patent Office**

**Office européen des brevets**

(11) **EP 1 022 505 A1**

(12) **DEMANDE DE BREVET EUROPEEN**

(43) Date de publication:
**26.07.2000 Bulletin 2000/30**

(51) Int. Cl.⁷: **F16L 55/033**, F16L 55/05

(21) Numéro de dépôt: **00400144.2**

(22) Date de dépôt: **20.01.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **22.01.1999 FR 9900991**

(71) Demandeur: **MECAPLAST SAM**
**MC-98000 Monaco (MC)**

(72) Inventeur: **Sayag, Ari**
**06000 Nice (FR)**

(74) Mandataire: **Debay, Yves**
**Cabinet Debay,**
**126 Elysée 2**
**78170 La Celle Saint Cloud (FR)**

(54) **Dispositif de diminution de bruit d'air, procédé de fabrication et utilisations d'un tel dispositif**

(57) Dispositif de diminution de bruit dans une conduite de fluide gazeux comprenant un tube (1), caractérisé en ce que la surface du tube (1) comprend au moins un orifice (2) de forme et dimension déterminées par le calcul ou essai pour obtenir un compromis acceptable entre la réduction du bruit de bouche et le bruit rayonné par le ou les orifices.

FIG 1

EP 1 022 505 A1

## Description

La présente invention concerne un dispositif de diminution de bruit d'air, un procédé de fabrication et des utilisations d'un tel dispositif. Ce dispositif de réduction est principalement utilisé pour réduire le bruit de bouche dans des conduites destinées au transport de fluides gazeux.

Il est connu par la demande de brevet européen EP 814291 un tuyau de transport de fluides gazeux, notamment dans les automobiles pour le transport d'air dans le moteur et l'habitacle. Ce tuyau est étanche aux liquides et est constitué d'une première bande poreuse et perméable aux fluides gazeux et enroulée en hélice sur elle-même. Le tuyau comprend une deuxième bande perméable aux fluides gazeux et étanche aux fluides. Cette deuxième bande est également enroulée en hélice, de sorte que ses spires se recouvrent ou se chevauchent au moins en partie. Ce tuyau présente l'inconvénient d'être complètement perméable aux fluides gazeux, ce qui interdit le transport de gaz nocif. De même, sa fabrication est complexe et coûteuse, car elle nécessite deux enroulements déterminés de bandes, ainsi que diverses opérations de collage ou soudage des bandes entre elles.

Il est également connu par la demande de brevet européen EP 665404 un tuyau cylindrique flexible pour le transport de gaz utilisé notamment pour amener l'air vers le moteur. Ce tuyau comprend un revêtement flexible absorbant les bruits et un ruban support ajouré sur lequel est placé le revêtement. De plus, ce tube est réalisé en superposant une pluralité de couches de matériaux différents, ce qui augmente les coûts de fabrication.

La présente invention a donc pour premier objet de pallier les inconvénients de l'art antérieur en proposant un dispositif de diminution de bruit d'air de conception simple.

Ce but est atteint par le fait que le dispositif de diminution de bruit dans une conduite de fluide gazeux comprenant un tube est caractérisé en ce que la surface du tube comprend au moins un orifice de forme et dimensions déterminées par le calcul ou essai pour obtenir un compromis acceptable entre la réduction du bruit de bouche et le bruit rayonné par le ou les orifices.

Selon une autre particularité, l'orifice est obturé partiellement ou totalement par une membrane poreuse dans un matériau dont les caractéristiques sont déterminées en fonction des études faites cas par cas afin d'obtenir le résultat escompté.

Selon une autre particularité, le compromis est choisi tel que le bruit rayonné soit inférieur d'au moins 5dB au bruit de bouche.

Selon une autre particularité, la membrane est remplacée par un manchon/membrane poreux disposé sur la surface extérieure du tube de façon à obturer partiellement ou totalement l'orifice.

Un autre but de l'invention consiste à proposer un dispositif de réduction du bruit étanche à tous les fluides.

Ce but est atteint par le fait que le dispositif de diminution de bruit d'air comprenant un tube de section déterminée et de matériau déterminé étanches aux fluides est caractérisé en ce que la surface du tube comprend au moins un orifice de forme et dimensions déterminées, le tube comprenant également des moyens étanches aux fluides solidaires de la surface extérieure du tube et disposés au niveau de l'orifice pour réaliser l'étanchéité aux fluides du dispositif.

Selon une autre particularité, les moyens étanches aux fluides comprennent un manchon étanche constitué d'un matériau étanche aux fluides et dont les extrémités sont solidarisées de manière étanche à la surface extérieure du tube dans des zones encadrant l'orifice.

Selon une autre particularité, les moyens étanches aux fluides comprennent une coque rigide ou non constituée d'un matériau étanche aux fluides, et solidarisée de manière étanche à la surface extérieure du tube, la coque étant disposée sur le tube de sorte que l'orifice soit situé dans l'espace délimité par la coque.

Selon une autre particularité, les dimensions et la position de l'orifice sont déterminées en fonction de la longueur du tube, de la vitesse du son dans le tube, du diamètre du tube et du bruit admissible rayonné par l'orifice.

Selon une autre particularité, l'orifice est positionné à égale distance des deux extrémités du tube.

Selon une autre particularité, le matériau constituant le tube est une matière plastique moulée ou soufflée, ou thermoformée, ou extrudée ou rotomoulée ou réalisée par l'intermédiaire de tout autre procédé de mise en oeuvre de matière plastique.

Selon une autre particularité, l'orifice est réalisé lors du moulage du tube.

Selon une autre particularité, les éléments du dispositif sont constitués de matériaux chimiquement proches pour permettre un recyclage du dispositif selon l'invention en une seule opération, sans séparation des éléments.

Selon une autre particularité, la différence de pression entre l'intérieur du dispositif et l'extérieur du dispositif est positive ou négative.

Selon une autre particularité, la membrane ou le manchon/membrane sont partiellement ou totalement étanches aux liquides.

Selon une autre particularité, le dispositif de diminution de bruit d'air comprend un tube de section déterminée et de matériau déterminé étanche aux fluides et est caractérisé en ce que la surface du tube comprend au moins un orifice de forme et dimensions déterminées.

Selon une autre particularité, l'orifice est obturé totalement par une membrane poreuse de matériau déterminé et de dimensions déterminées supérieures aux dimensions de l'orifice pour le recouvrir totalement ou partiellement.

Selon une autre particularité, le matériau constituant la membrane est oléophobe et/ou hydrophobe.

Selon une autre particularité, la membrane est remplacée par un manchon/membrane disposée sur la surface extérieure du tube de façon à obturer partiellement ou totalement l'orifice.

Un deuxième but de l'invention consiste en des utilisations particulières du dispositif.

Ce but est atteint par le fait que le dispositif selon l'invention est utilisé dans le transport des fluides gazeux de l'extérieur d'une automobile vers un système de ventilation de l'habitacle et/ou vers l'admission d'air du moteur.

Selon une autre particularité, le dispositif selon l'invention est utilisé dans le transport des fluides gazeux d'un système de ventilation et/ou climatisation d'un immeuble.

Selon une autre particularité, le dispositif selon l'invention est utilisé dans le transport de fluides gazeux toxiques tels que du gaz de ville.

Selon une autre particularité, l'invention est utilisée dans le transport des fluides gazeux de l'intérieur d'une automobile vers l'extérieur de l'habitacle de l'automobile.

Selon une autre particularité, l'invention est utilisée sur un circuit d'échappement d'une automobile.

Un dernier but consiste en un procédé de fabrication du dispositif selon l'invention.

Ce dernier but est atteint par le fait que le procédé de fabrication du dispositif comprend:

- une étape de réalisation d'un orifice de dimensions déterminées dans un tube constitué d'un matériau étanche aux fluides
- une étape d'obturation de cet orifice par un matériau poreux déterminé.

Selon une autre particularité, l'étape de réalisation de l'orifice consiste à réaliser un perçage de dimensions déterminées sur la surface extérieure du tube.

Selon une autre particularité, l'étape d'obturation consiste à solidariser une membrane poreuse de matériau déterminé sur la surface extérieure ou intérieure du tube au niveau de l'orifice.

Selon une autre particularité, la solidarisation de la membrane sur la surface extérieure ou intérieure est réalisée par un procédé thermique et préférentiellement par collage et/ou soudage et/ou surmoulage.

Selon une autre particularité, la solidarisation de la membrane sur la surface extérieure ou intérieure est réalisée par un procédé mécanique et préférentiellement par clipsage et/ou bouterollage et/ou par des mécanismes vibratoires et/ou par l'intermédiaire d'une pièce intermédiaire d'assemblage.

Selon une autre particularité, l'étape d'obturation consiste à recouvrir l'orifice avec un manchon/membrane, constitué d'un matériau poreux, enfilé sur le tube.

D'autres particularités et avantages de la présente invention apparaîtront plus clairement à la lecture de la description ci-après faite en référence aux dessins annexés dans lesquels:

- la figure 1 représente une vue en perspective d'une première variante de réalisation du dispositif selon l'invention.
- la figure 2 représente une vue en perspective d'une deuxième variante de réalisation du dispositif selon l'invention.
- la figure 3 représente une vue de coté d'une troisième variante de réalisation du dispositif selon l'invention.
- la figure 4 représente une vue selon la coupe transversale A-A de la troisième variante de réalisation du dispositif selon l'invention représentée figure 3.
- les figures 5A à 5C représentent un premier exemple de réalisation de l'invention, ainsi que les courbes d'atténuation obtenue,
- les figures 6A et 6B représentent les courbes d'atténuation obtenues avec un deuxième exemple de réalisation de l'invention.

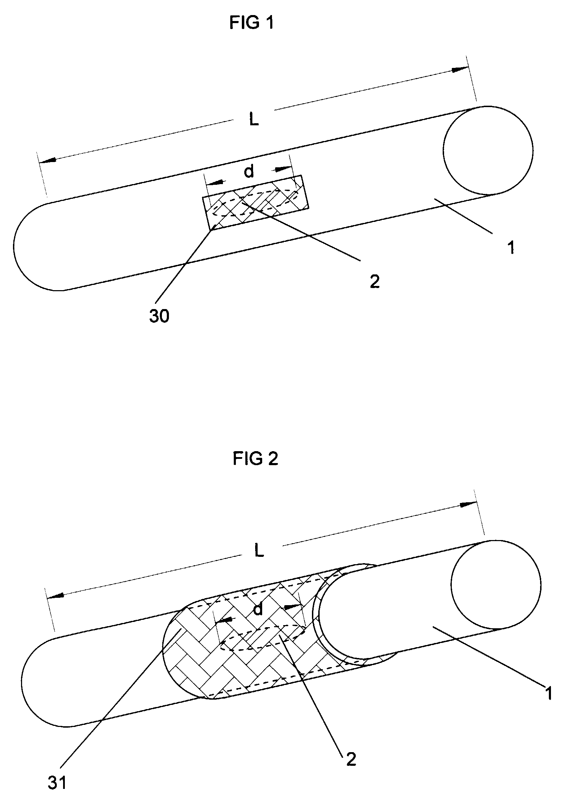

La présente invention va être à présent décrite en référence aux figures 1 et 2.

De manière connue, un tube de transport de fluide gazeux présente une fréquence de résonance, c'est-à-dire un maximum de pression, qui dépend notamment de sa longueur et est définie, pour un tube ouvert à ses deux extrémités, par la formule:

$$F_n = (n*C)/(2*L),$$

où

C est la vitesse du son dans le tube (en m/s),
n est un nombre entier,
L est la longueur du tube en mètre

A cette fréquence, l'amplitude des ondes est maximale, et par conséquent le tube entre en résonance. Un bruit de bouche est un bruit d'une source acoustique connectée à une extrémité du tube (1) et mesuré à l'autre extrémité de ce tube (1). Selon la présente invention, afin de réduire ce phénomène sans pour autant augmenter le coût de la conduite de transport de gaz, le dispositif comprend un tube (1) ou une conduite qui présente la caractéristique particulière d'être étanche à tous les fluides, gaz et liquides. Ce tube (1) est de longueur (L) déterminée en fonction des besoins de l'utilisateur et de section, par exemple, circulaire. La réduction du bruit de bouche est obtenue par l'intermédiaire d'un orifice (2) de forme et dimensions déterminées, pratiqué sur la surface extérieure du tube (1). La forme et les dimensions de cet orifice (2) sont déterminées en recherchant un compromis entre une réduction satisfaisante du bruit de bouche et un bruit rayonné par l'orifice (2) acceptable. Le compromis choisi peut par exemple être que le bruit rayonné doit être inférieur d'au moins 5dB au bruit de bouche. Quoi qu'il en soit, les dimensions choisies pour l'orifice n'altèrent pas la fonction de transport du gaz par le tube (1). Cet orifice (2) crée ainsi une porosité locale sur le tube (1) qui a pour effet d'atténuer l'amplitude de résonance du tube (1). Cette porosité est contrôlée par les dimensions de l'orifice (2). Les dimensions et la position de l'orifice (2) sont déterminées en fonction, notamment, de la longueur du tube (1), de la vitesse du son dans le tube (1), du diamètre du tube (1), et du bruit admissible rayonné par l'orifice. La longueur (d) de l'orifice (2) suivant l'axe du tube (1) est limitée par les caractéristiques mécaniques que doit posséder le tube (1). Ainsi, la longueur (d) de l'orifice (2) ne doit pas occasionner de dégradation dans la tenue du tube (1), ou dans la résistance à la torsion du tube (1). Le tube doit également conserver ses propriétés de transport du fluide gazeux. La distance A de l'orifice par rapport à l'une des extrémités du tube (1) peut être déterminée, pour un tube ouvert à ces deux extrémités, par la formule:

$$A=(C)/(4*F')$$

Dans cette formule F' est la fréquence de résonance que l'utilisateur souhaite traiter.

La position de l'orifice (2) est déterminée par le calcul et l'orifice peut être positionné, par exemple, à égale distance des deux extrémités du tube (1), ceci afin d'optimiser la réduction du bruit. En fait, pour une efficacité maximum, l'orifice doit être placé sur le maximum de pression du tube (1).

Les dimensions de l'orifice peuvent être déterminées par l'intermédiaire d'essais. Ces essais consistent, par exemple, dans un premier temps, à mesurer le bruit de bouche du tube (1) puis, dans une deuxième étape, à déterminer, par exemple par la formule ci-dessus la position A de l'orifice. Dans une troisième étape, on réalise un orifice (2) de dimension déterminée, par exemple, de l'ordre de quelques millimètres carrés de surface de tube (1). Dans une quatrième étape, on fait circuler le fluide dans le tube (1) pour mesurer l'atténuation obtenue. Si l'atténuation n'est pas suffisante, on augmente la taille de l'orifice (2). Enfin, on contrôle le niveau du bruit rayonné par l'orifice (2) en contrôlant la porosité de la membrane (30) placée sur l'orifice, tel que décrit par la suite.

Il est également possible dans une première variante de réalisation du dispositif, de contrôler la porosité locale du tube (1) en obturant l'orifice (2) par une membrane (30) poreuse constituée d'un matériau déterminé. Ainsi, la porosité locale du tube (1) dépend également de la porosité de la membrane (30) utilisée. Du matériau, par exemple fibreux, peut être utilisé pour réaliser la membrane (30). Selon l'application envisagée, la porosité sera choisie pour assurer, par exemple, l'étanchéité aux poussières supérieures à une taille déterminée. Cette membrane (30) peut également posséder d'autres caractéristiques particulières en combinaison ou séparément. Notamment, cette membrane (30) peut être oléophobe et/ou hydrophobe et par conséquent être étanche aux liquides. Ainsi, l'intégralité du dispositif selon l'invention est étanche aux liquides, tout en conservant ses propriétés de réduction de bruit. Toutefois, il est possible d'envisager de choisir, pour réaliser la membrane, un matériau qui ne soit que partiellement étanche aux liquides. Cette propriété de perméabilité partielle au liquide est par exemple obtenue par un tissage particulier du matériau constituant la membrane (30), ce tissage conférant à la membrane des propriétés déperlantes. De même, ces propriétés de perméabilité partielle aux liquides peuvent être obtenues par un matériau fibreux ou tout autre matériau poreux déterminé.

La membrane est, par exemple, solidarisée à la surface extérieure du tube (1), notamment par un procédé thermique tel que, par exemple, le collage à chaud ou le soudage ou surmoulage ou par un procédé mécanique tel que, par exemple, un clipsage, un bouterollage ou un soudage à ultrasons ou autre technique vibratoire, ou encore par un procédé chimique tel que le collage par solvant. Il est également possible d'envisager une variante de réalisation (non représentée) dans laquelle la membrane est solidarisée à la surface intérieure du tube (1) selon les mêmes procédés que ceux énoncés précédemment. De même, la membrane (30) peut être solidarisée à une pièce intermédiaire (non représentée) permettant son assemblage sur le tube (1).

Dans une deuxième variante de réalisation, la membrane (30) poreuse est remplacée par un manchon/membrane (31) qui vient recouvrir l'orifice (2). Les critères de choix du matériau constituant ce manchon/membrane (31) sont sensiblement les mêmes que ceux déterminant le choix du matériau constituant la membrane (30). Les dimensions et les formes de la section du manchon/membrane (31) sont sensiblement identiques à celles de la section du tube (1). Ainsi, le manchon/membrane (31) peut être enfilé par une extrémité du tube (1) et amené par coulissement sur la surface extérieure du tube (1) jusqu'au niveau de l'orifice pour le recouvrir. Une fois positionné, le manchon/membrane (31) est par exemple solidarisé à la surface extérieure du tube (1), par exemple par l'intermédiaire de procédés utilisés pour solidariser la membrane (30) au tube (1) ou bien par un procédé de thermo-rétractation. Dans ce dernier procédé, le manchon/membrane (31) est réalisé dans une matière thermo-rétractable. L'utilisation du manchon/membrane (31) permet d'éviter une étape de solidarisation de la membrane sur la surface extérieure du tube (1). Par contre, les dimensions et les formes de la section du tube (1) doivent être sensiblement identiques sur toute sa longueur, de sorte que le manchon/membrane (31) puisse être enfilé sur le tube (1) jusqu'au niveau de l'orifice (2).

Le procédé de fabrication du dispositif selon l'invention comprend dans une première étape la réalisation de l'orifice (2) dans le tube (1) étanche. Cet orifice (2) est obtenu soit par perçage d'un tube (1) homogène, soit par une conception particulière d'un tube comportant un orifice (2) dès sa fabrication.

Ensuite, pour la réalisation des variantes de réalisation représentées aux figures 1 et 2, le procédé de fabrication comprend une étape d'obturation de l'orifice (2) préalablement réalisé, par exemple en solidarisant une membrane (30) de porosité déterminée sur la surface extérieure du tube par l'intermédiaire d'un ou d'une combinaison de procédés thermiques, mécaniques ou chimiques décrits précédemment. L'obturation de l'orifice peut également être réalisée par l'intermédiaire du manchon/membrane (31) décrit précédemment en enfilant ce manchon/membrane sur le tube (1). Le tube (1) peut être réalisé avec un matériau du type matière plastique moulée. Ainsi, il est possible de réaliser l'orifice (2), par exemple lors du moulage du tube (1). De même, le procédé de fabrication du tube (1) peut être l'un quelconque des procédés de fabrication de matière plastique tels que le soufflage, le thermoformage, le rotomoulage, l'extrusion, ou l'injection.

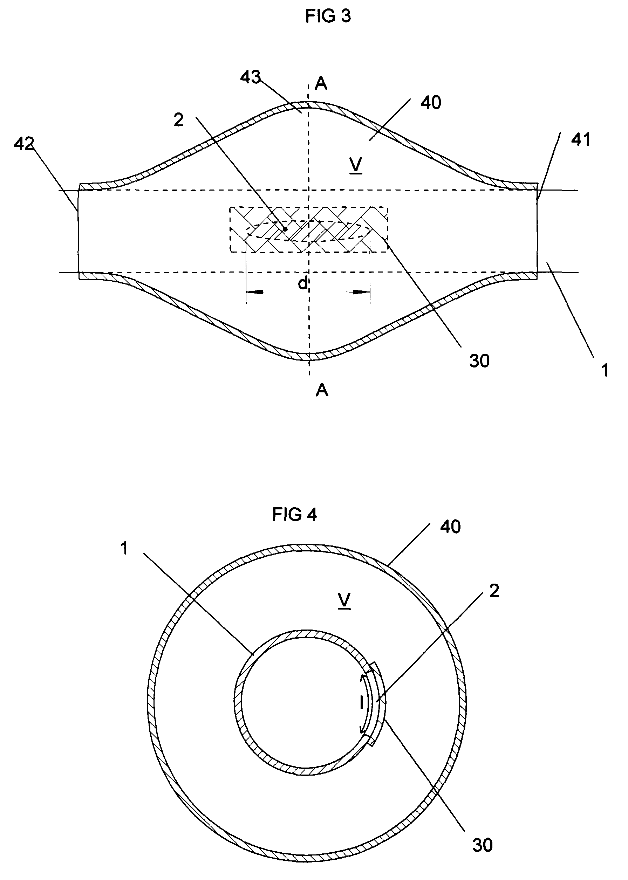

Dans une troisième variante, représentée figures 3 et 4, le dispositif selon l'invention est rendu étanche au gaz tout en conservant ses propriétés de réduction du bruit. Pour ce faire, le dispositif comprend des moyens (40) étanches aux fluides disposés sur le tube (1) au niveau de l'orifice. Ces moyens étanches comprennent, par exemple, une coque (40) étanche rigide ou non, constituée d'un matériau étanche aux fluides. Chaque extrémité (41, 42) de cette coque (40) étanche est solidarisée de manière étanche à la surface extérieure du tube (1) de part et d'autre de l'orifice (2) qui, dans cette variante, est obturé par une membrane (2). Pour que l'orifice (2) remplisse sa fonction, la coque étanche (40) comprend, sur toute sa périphérie et à la verticale de l'orifice (2), une portion (43) bombée ou renflée de sorte que, dans cette portion (43), la coque (40) étanche ne soit pas en contact avec le tube (1). Cette coque est également solidarisée de manière étanche au tube (1) et n'est pas en contact avec celui-ci au voisinage de l'orifice (2). Dans la variante, de réalisation représentée figure 3 et 4, l'orifice est obturé par la membrane (30). Cependant il est possible de remplacer cette membrane (30) par le manchon/membrane (31) décrit précédemment ou encore de supprimer cette membrane (30).

Ce volume (V) est déterminé pour que le dispositif conserve ses propriétés d'atténuation du bruit de bouche.

Les différents éléments (1, 30, 31, 40) du dispositif selon l'invention sont, par exemple, constitués respectivement de matériaux chimiquement proches, de sorte qu'il soit possible de réaliser le recyclage du dispositif de diminution de bruit, quelle que soit la variante de réalisation, en une seule opération et sans séparer les éléments les uns des autres.

Afin de mieux se rendre compte de l'efficacité de l'invention deux exemple d'application vont être présentés.

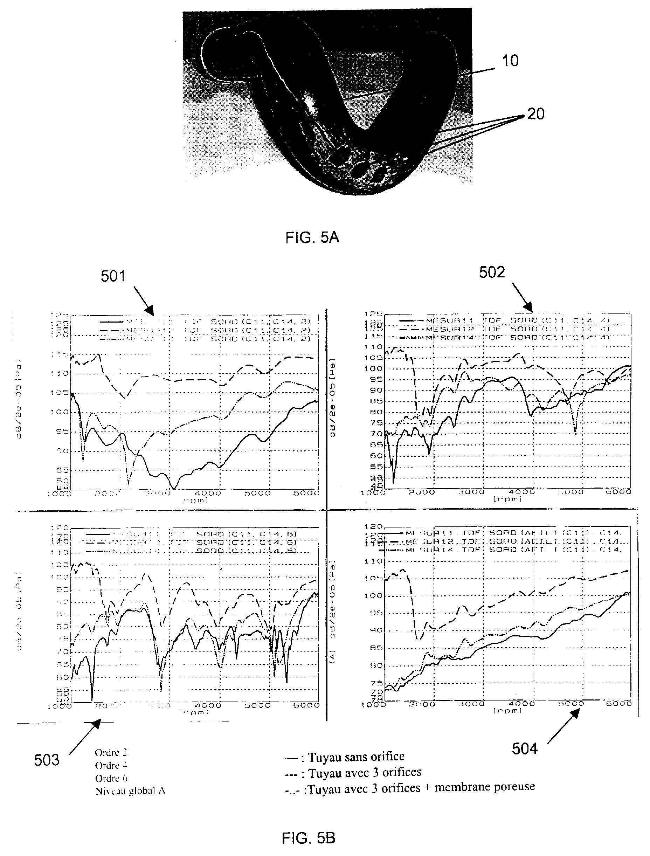

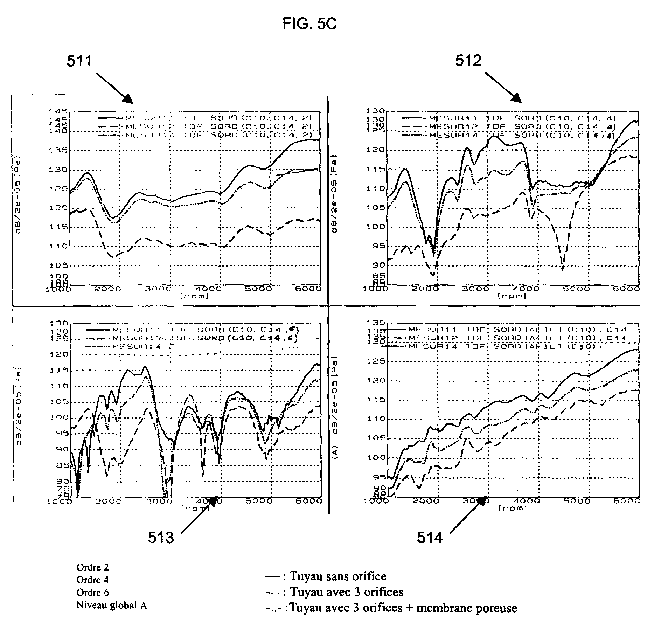

Le premier exemple, représente aux figures 5A à 5C un tuyau (10) d'admission d'air sale d'un circuit d'admission d'un moteur. Selon l'invention ce tuyau (10) est percé en son milieu de trois orifices (20) d'environ 1cm$^2$. Les courbes représentées aux figures 5B et 5C permettent de vérifier l'influence des orifices et d'une membrane poreuse sur l'atténuation du bruit rayonné par les orifices du tuyau (fig. 5B) et sur le bruit de bouche du tuyau (fig. 5C). Les courbes 5B sont réalisées en mesurant le niveau sonore enregistré au niveau des orifices, alors que les figure 5C sont réalisées en mesurant le niveau sonore enregistré au niveau de l'extrémité du tube. L'axe des abscisses des courbes (501 à 504, et 511 à 514) représente le régime moteur en tours/min et l'axe des ordonnées représente le niveau sonore en dB. Les trois premières courbes (501 à 503, fig. 5A) et 511 à 513) représentent le niveau sonore des harmoniques, respectivement d'ordre 2, d'ordre 4, et d'ordre 6 pour le bruit rayonné. Les trois premières courbes (511 à 513, fig. 5C) représentent le niveau sonore des harmoniques, respectivement d'ordre 2, d'ordre 4, et d'ordre 6 pour le bruit de bouche. La quatrième courbe (504) pour le bruit rayonné et (514) pour le bruit de bouche représente le niveau sonore global pondéré 《 A 》 pour prendre en compte la sensibilité de l'oreille humaine.

Ainsi, sur la figure 5B on constate sur le trait continu que sans les trois orifices, le bruit rayonné est le plus faible. En réalisant les trois orifices, on constate sur la courbe en pointillé que le bruit rayonné est augmenté de 35dB.

En ajoutant la membrane poreuse, l'enregistrement correspondant à la courbe en trait mixtes, montre que la diminution en bruit rayonné est plus importante.

De même, sur la figure 5C, la courbe mixte montre que les trois orifices et la membrane permettent de diminuer de 5dB le niveau de bruit de bouche sur le niveau global pondéré 《 A 》.

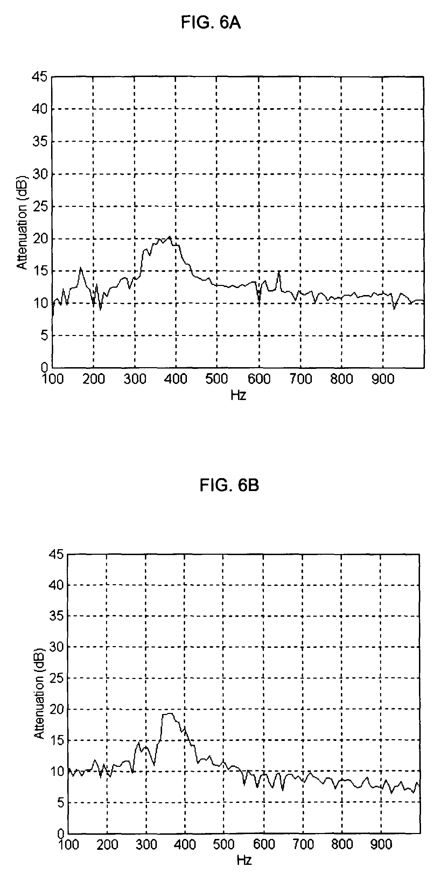

Le deuxième exemple est une comparaison entre l'atténuation obtenue avec un tuyau poreux de l'art antérieur et un tuyau selon l'invention, le tuyau selon l'invention est un tuyau poreux en polypropylène comprenant deux orifices de 400mm sur 20mm. La figure 6B représente la mesure de l'atténuation pour un tuyau poreux de l'art antérieur et la figure 6A représente l'atténuation pour le tube selon l'invention. L'axe des abscisses représente la fréquence du son atténué en Hz, et l'axe des ordonnées représente le niveau d'atténuation en dB.

On constate clairement sur la figure 6A que l'atténuation avec le tube selon l'invention est systématiquement supérieure à l'atténuation obtenue avec un tuyau poreux classique.

On conçoit que le dispositif selon l'invention est de conception simple puisque le tube utilisé peut être réalisé à partir d'un matériau standard étanche aux fluides. Le dispositif selon l'invention peut être utilisé, notamment pour le transport de l'air dans un véhicule et plus particulièrement pour le transport de l'air, d'une part vers le moteur (filtre à air), et d'autre part vers l'habitacle via le système de ventilation du véhicule. Cette utilisation particulière du dispositif selon l'invention permet de réduire sensiblement les bruits occasionnés par les phénomènes d'aspiration, notamment du moteur et/ou de la ventilation. Une autre utilisation du dispositif consiste en son intégration à un système de ventilation de bâtiment du type VMC. De même, le dispositif selon l'invention peut être utilisé sur le circuit d'échappement d'une automobile pour atténuer les bruits d'échappement ou sur des conduites assurant le transport de fluides gazeux de l'intérieur vers l'extérieur de l'habitacle d'une automobile et vice-versa.

Lorsque le manchon et/ou la coque étanche sont mis en place sur le tube du dispositif, celui-ci peut être utilisé pour le transport de gaz inflammable et/ou toxique. En effet, l'adjonction du manchon ou de la coque étanche rend le dispositif complètement hermétique au fluide. Ainsi, aucun fluide ne peut entrer ou sortir du tube, hormis par l'intermédiaire de ses extrémités. De même, l'ajout du manchon et/ou de la coque étanche permet une utilisation du dispositif pour transporter des gaz sous pression ou bien des gaz ayant une pression plus faible que la pression existante à l'extérieur du dispositif.

Il est clair que d'autres modifications à la portée de l'homme du métier entrent dans le cadre de l'invention. Notamment, il est possible d'envisager la réalisation d'une pluralité d'orifices (2) tels que décrits précédemment.

## Revendications

1. Dispositif de diminution de bruit dans une conduite de fluide gazeux comprenant un tube (1), caractérisé en ce que la surface du tube (1) comprend au moins un orifice (2) de forme et dimensions déterminées par le calcul ou essai pour obtenir un compromis acceptable entre la réduction du bruit de bouche et le bruit rayonné par le ou les orifices.

2. Dispositif de diminution de bruit selon la revendication 1, caractérisé en ce que l'orifice est obturé partiellement ou totalement par une membrane (30) poreuse dans un matériau dont les caractéristiques sont déterminées en fonction des études faites cas par cas, afin d'obtenir le résultat escompté.

3. Dispositif de diminution de bruit selon la revendication 1 ou 2, caractérisé en ce que le compromis est choisi tel que le bruit rayonné soit inférieur d'au moins 5dB au bruit de bouche.

4. Dispositif de diminution de bruit selon la revendication 2, caractérisé en ce que la membrane (30) est remplacée par un manchon/membrane (31) poreux disposé sur la surface extérieure du tube (1), de façon à obturer partiellement ou totalement l'orifice (2).

5. Dispositif de diminution de bruit selon l'une des revendications 1 à 4, caractérisé en ce que le tube (1) comprend également des moyens (40) étanches aux fluides et solidaires de la surface extérieure du tube (1) et disposés au niveau de l'orifice (2) pour réaliser l'étanchéité aux fluides du dispositif.

6. Dispositif de diminution de bruit, selon la revendication 5, caractérisé en ce que les moyens étanches aux fluides comprennent un manchon (40) constitué d'un matériau étanche aux fluides et dont les extrémités sont solidarisées de manière étanche à la surface extérieure du tube (1) dans des zones encadrant l'orifice (2).

7. Dispositif de diminution de bruit selon la revendication 5, caractérisé en ce que les moyens étanches aux fluides comprennent une coque rigide ou non, constituée d'un matériau étanche aux fluides et solidarisée de manière étanche à la surface extérieure du tube (1), la coque étant disposée sur le tube (1), de sorte que l'orifice (2) soit situé dans l'espace délimité par la coque.

8. Dispositif de diminution de bruit selon l'une des revendications 1 à 7, caractérisé en ce que les dimensions et la position de l'orifice (2) sont déterminées en fonction de la longueur du tube (1), de la vitesse du son dans le tube (1), du diamètre du tube (1) et du bruit admissible rayonné par l'orifice (2).

9. Dispositif de diminution de bruit selon l'une des revendications 1 à 8, caractérisé en ce que le matériau constituant le tube (1) est une matière plastique moulée ou soufflée, ou thermoformée, ou extrudée, ou rotomomoulée ou réalisée par l'intermédiaire de tout autre procédé de mise en oeuvre de matière plastique.

10. Dispositif de diminution de bruit selon la revendication 9, caractérisé en ce que l'orifice est réalisé lors du moulage du tube (1).

11. Dispositif de diminution de bruit selon l'une des revendications 1 à 10, caractérisé en ce que les éléments (1, 30, 31, 40) du dispositif de diminution de bruit sont constitués de matériaux chimiquement proches pour permettre un recyclage du dispositif en une seule opération, sans séparation des éléments.

12. Dispositif de diminution de bruit selon l'une des revendications 4 à 7 prise en combinaison avec l'une des revendications 1, 4 et 8 à 11, caractérisé en ce que la différence de pression entre l'intérieur du dispositif et l'extérieur du dispositif est positive ou négative.

13. Dispositif de diminution de bruit selon l'une des revendications 1 à 12, caractérisé en ce que la membrane (30) ou le manchon/membrane (31) sont partiellement ou totalement étanches aux liquides.

14. Utilisation du dispositif selon l'une des revendications 1 à 13, caractérisée en ce que le dispositif est appliqué aux tubes permettant le transport des fluides gazeux de l'extérieur d'une automobile vers un système de ventilation de l'habitacle et/ou vers l'admission d'air du moteur.

15. Utilisation du dispositif selon l'une des revendications 1 à 13, caractérisée en ce que le dispositif est appliqué aux tubes permettant le transport des fluides gazeux d'un système de ventilation et/ou climatisation d'un immeuble.

16. Utilisation du dispositif selon l'une des revendications 5 à 7 prise en combinaison avec l'une des revendications 1, 4 et 8 à 13, caractérisée en ce que le dispositif est appliqué aux tubes permettant le transport de fluides gazeux, notamment toxiques et/ou inflammables.

17. Utilisation du dispositif selon l'une des revendications 1 à 13, caractérisée en ce que le dispositif est utilisé dans le transport des fluides gazeux de l'intérieur d'une automobile vers l'extérieur de l'habitacle de l'automobile.

18. Utilisation du dispositif selon l'une des revendications 1 à 13, caractérisée en ce que le dispositif est appliqué sur un circuit d'échappement d'une automobile.

19. Procédé de fabrication du dispositif selon l'une des revendications 1 à 13, caractérisé en ce qu'il comprend:

- une étape de réalisation d'un orifice (2) de dimensions déterminées dans un tube (1) constitué d'un matériau étanche aux fluides,
- une étape d'obturation de cet orifice (2) par un matériau poreux déterminé.

20. Procédé de fabrication selon la revendication 19, caractérisé en ce que l'étape de réalisation de l'orifice (2) consiste à réaliser un perçage de dimensions déterminées sur la surface extérieure du tube (1).

21. Procédé de fabrication selon la revendication 19 ou 20, caractérisé en ce que l'étape d'obturation consiste à solidariser une membrane (30) poreuse de matériau déterminé sur la surface extérieure ou intérieure du tube (1) au niveau de l'orifice (2).

22. Procédé de fabrication selon la revendication 21, caractérisé en ce que la solidarisation de la membrane (30) sur la surface extérieure ou intérieure du tube (1) est réalisée par un procédé thermique et préférentiellement par collage et/ou soudage et/ou surmoulage.

23. Procédé de fabrication selon la revendication 22, caractérisé en ce que la solidarisation de la membrane (30) sur la surface extérieure ou intérieure du tube (1) est réalisée par un procédé mécanique et préférentiellement par clipsage et/ou bouterollage et/ou par des mécanismes vibratoires et/ou par l'intermédiaire d'une pièce intermédiaire d'assemblage.

24. Procédé de fabrication selon la revendication 22, caractérisé en ce que l'étape d'obturation consiste à recouvrir l'orifice (2) avec un manchon/membrane (31) constitué d'un matériau poreux enfilé sur le tube (1).

FIG 1

L

d

1

2

30

FIG 2

L

d

1

2

31

## FIG 3

## FIG 4

FIG. 5A

501

502

503

504

Ordre 2
Ordre 4
Ordre 0
Niveau global A

— : Tuyau sans orifice
--- : Tuyau avec 3 orifices
-..- :Tuyau avec 3 orifices + membrane poreuse

FIG. 5B

FIG. 5C

511

512

513

514

Ordre 2
Ordre 4
Ordre 6
Niveau global A

— : Tuyau sans orifice
--- : Tuyau avec 3 orifices
-..- :Tuyau avec 3 orifices + membrane poreuse

FIG. 6A

FIG. 6B

**Office européen des brevets**

# RAPPORT DE RECHERCHE EUROPEENNE

Numéro de la demande

EP 00 40 0144

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 732 741 A (SHIERY JEFFREY C) 31 mars 1998 (1998-03-31)<br><br>* abrégé *<br>* figures 1-3 *<br>* colonne 1, ligne 4 - ligne 13 *<br>* colonne 2, ligne 24 - ligne 67 *<br>* colonne 5, ligne 28 - ligne 40 *<br>* revendication 1 * | 1,2, 4-10,12, 13 | F16L55/033 F16L55/05 |
| A | | 3,11, 14-22 | |
| X | GB 2 234 015 A (HYPRO CORP) 23 janvier 1991 (1991-01-23)<br>* abrégé *<br>* figure 1 * | 1,2,4-10 | |
| A | | 3,11, 13-22 | |
| A | FR 2 567 619 A (SUGIMURA NOBUYUKI) 17 janvier 1986 (1986-01-17)<br>* revendication 1 *<br>* figures 1-3 * | 1-10 | DOMAINES TECHNIQUES RECHERCHES (Int.Cl.7)<br><br>F16L |

Le présent rapport a été établi pour toutes les revendications

| Lieu de la recherche | Date d'achèvement de la recherche | Examinateur |
|---|---|---|
| BERLIN | 10 avril 2000 | Schaeffler, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 00 40 0144

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2000

| Document brevet cité au rapport de recherche | Date de publication | Membre(s) de la famille de brevet(s) | | Date de publication |
|---|---|---|---|---|
| US 5732741 A | 31-03-1998 | AUCUN | | |
| GB 2234015 A | 23-01-1991 | US | 4712584 A | 15-12-1987 |
| | | DE | 3724381 A | 09-06-1988 |
| | | FR | 2607898 A | 10-06-1988 |
| | | GB | 2198478 A,B | 15-06-1988 |
| | | IT | 1211739 B | 03-11-1989 |
| | | JP | 1730399 C | 29-01-1993 |
| | | JP | 4019417 B | 30-03-1992 |
| | | JP | 63152793 A | 25-06-1988 |
| | | JP | 4366090 A | 17-12-1992 |
| | | US | 4732175 A | 22-03-1988 |
| FR 2567619 A | 17-01-1986 | JP | 1773457 C | 14-07-1993 |
| | | JP | 4048961 B | 10-08-1992 |
| | | JP | 61062689 A | 31-03-1986 |
| | | DE | 3524133 A | 16-01-1986 |
| | | GB | 2163488 A,B | 26-02-1986 |
| | | US | 4633910 A | 06-01-1987 |

EPO FORM P0460

Pour tout renseignement concernant cette annexe : voir Journal Officiel de l'Office européen des brevets, No.12/82